# EUROPÄISCHE PATENTSCHRIFT

(11) **EP 3 917 821 B1**
(45) Veröffentlichungstag und Bekanntmachung des Hinweises auf die Patenterteilung: **16.07.2025**
(21) Anmeldenummer: 19829014.0
(22) Anmeldetag: 11.12.2019
(51) Int. Cl.: B62K 21/18, B62J 45/411, B62J 45/422

(54) **VORRICHTUNG ZUR ERMITTLUNG DES FAHRERLENKMOMENTS**
DEVICE FOR DETERMINING THE DRIVER STEERING TORQUE
DISPOSITIF DE DÉTERMINATION DU COUPLE DE BRAQUAGE DU CONDUCTEUR

(30) Priorität: 01.02.2019 DE 102019102533
(43) Veröffentlichungstag der Anmeldung: 08.12.2021
(73) Patentinhaber: Bayerische Motoren Werke Aktiengesellschaft, 80809 München (DE)
(72) Erfinder: SCHRUPP, Rudolf, 82110 Germering (DE); SCHROEDER, Johannes, 83734 Hausham (DE)
(86) Internationale Anmeldenummer: PCT/EP2019/084643
(87) Internationale Veröffentlichungsnummer: WO 2020/156717

(56) Entgegenhaltungen:
- EP-A1- 2 436 586
- EP-A1- 2 436 586
- EP-A1- 3 290 318
- EP-A1- 3 290 318
- DE-A1- 102013 220 696
- JP-A- 2008 068 734
- JP-A- 2008 068 734
- JP-A- 2011 046 342
- JP-A- 2011 046 342
- US-A1- 2011 239 786
- US-A1- 2011 239 786

## Beschreibung

Die Erfindung betrifft eine Vorrichtung sowie ein zugehöriges Verfahren zur Ermittlung des Fahrerlenkmoments.

Das Lenkmoment und insbesondere das Fahrerlenkmoment ist sowohl bei einspurigen als auch bei zweispurigen Kraftfahrzeugen eine besonders für Fahrerassistenzsysteme relevante Eingangsgröße. Als das Fahrerlenkmoment wird dabei das über den Lenker bzw. die Lenkstange des Motorrads durch den Fahrer eingebrachte Moment um die Lenkachse des Fahrzeugs verstanden.

Im Stand der Technik sind verschiedene Methoden zur Bestimmung des Fahrerlenkmoments bekannt. Diese sind jedoch zumeist speziell für zweispurige Kraftfahrzeuge ausgelegt und nicht auf einspurige Kraftfahrzeuge, wie Motorräder, anwendbar. Beispielsweise ist bei zweispurigen Fahrzeugen vorgesehen, das Fahrerlenkmoment über physikalische Modelle und durch bekannte Eingangsgrößen zu berechnen. Dies ist möglich, da verschiedene dynamische Einflussfaktoren, wie beispielsweise eine Körperbewegung des Fahrers bzw. der Fahrzeuginsassen, vernachlässigbar sind, was jedoch besonders bei Motorrädern nicht der Fall ist. Hinzukommt, dass ein Fahrergewicht bzw. das Verhältnis des Fahrergewichts zum Fahrzeuggewichts die Fahrdynamik bei Motorrädern ungleich höher beeinflusst als bei einem PKW. Diese Einflussfaktoren, Gewichtsverhältnis und Körperbewegung, können jedoch nicht oder nur sehr aufwändig über ein physikalisches Modell beschrieben werden, so dass die Bestimmung des Fahrerlenkmoments mit der herkömmlichen Methode nicht oder nur mit großem Aufwand möglich ist. Hinzukommt, dass weitere für die Bestimmung des Fahrerlenkmoments relevante fahrdynamische Einflüsse, wie Neigung des Motorrads und beispielsweise ein Kurvenradius bei einer Kurvenfahrt, durch die im Stand der Technik bekannten Methoden meist nicht berücksichtigt werden können. Bekannte Vorrichtungen zur Bestimmung des Fahrerlenkmoments sind überwiegend nur bei zweispurigen Kraftfahrzeugen einsetzbar und auf diese optimiert oder vergleichsweise teuer.

Vorrichtungen zur Lenkmomentermittlung für einspurige Kraftfahrzeuge sind beispielsweise aus den Dokumenten EP 3 290 318 A1, das alle Merkmale des Präambels des unabhängigen Anspruchs 1 offenbart, JP 2008 068734 A, JP 2011 046342 A, EP 2 436 586 A1 und US 2011/239786 A1 bekannt. Weiter lehrt das Dokument DE 10 2013 220 696 A1 eine Vorrichtung, durch welche eine axial um eine Lenkstange aufgebrachte Kraft zur Geschwindigkeitssteuerung eines Fahrzeugs mittels Dehnungsmessstreifen erfassbar ist.

Der Erfindung liegt deshalb die Aufgabe zugrunde, die vorgenannten Nachteile zu überwinden und eine Vorrichtung sowie ein zugehöriges Verfahren zur Lenkmomentermittlung an einspurigen Kraftfahrzeugen bereitzustellen, durch welche das Lenkmoment kostengünstig und mit geringem Platzbedarf ermittelbar ist.

Diese Aufgabe wird durch die Merkmalskombination gemäß Patentanspruch 1 gelöst.

Erfindungsgemäß wird eine Vorrichtung zur Lenkmomentermittlung an einem einspurigen Kraftfahrzeug vorgeschlagen. Die Vorrichtung umfasst eine um eine Lenkachse drehbar gelagerte Lenkstange, eine um die Lenkachse drehbar gelagerte Gabelbrücke sowie eine zwischen der Lenkstange und der Gabelbrücke angeordnete und mit diesen verbundene Koppelvorrichtung. Die Koppelvorrichtung ist ausgebildet, eine um die Lenkachse gerichtete Lenkbewegung von der Lenkstange auf die Gabelbrücke zu übertragen. Ferner ist an der Lenkstange ein Griffabschnitt vorgesehen, in welchen eine die Lenkbewegung verursachende Lenkkraft einleitbar ist, wobei die Lenkkraft insbesondere durch den Fahrzeugführer bzw. den Fahrer des eispurigen Kraftfahrzeugs auf den Griffabschnitt aufgebracht wird. Zwischen dem Griffabschnitt der Lenkstange und der Gabelbrücke ist ein Verformungsmesselement an der Lenkstange vorgesehen, welches ausgebildet ist, eine Verformung der Lenkstange zur Ermittlung des Lenkmoments zu messen, wobei die Lenkstange oder die Koppelvorrichtung zumindest abschnittsweise einen Hohlraum ausbildet und das Verformungsmesselement an einer zu dem Hohlraum weisenden Innenseite der Lenkstange oder der Koppelvorrichtung angeordnet ist.

Das durch die Lenkkraft eingebrachte Lenkmoment führt zu einer minimalen nicht sichtbaren Verformung der Lenkstange, die jedoch von dem Verformungsmesselement messbar ist.

Für die Positionierung des Verformungsmesselements ist die Anordnung zwischen dem Griffabschnitt und der Gabelbrücke ausschlaggebend, da dadurch ausschließlich Verformungen ermittelt werden können, welche unmittelbar mit dem Fahrerlenkmoment korrelieren, da sowohl die Verformungen als auch das Fahrerlenkmoment von den in den Griffabschnitt eingeleiteten Lenkkräften verursacht werden. An Bauteilen, in Kraftflussrichtung von den Griffabschnitten gesehen nach der Gabelbrücke, wie beispielsweise den Gabelbeinen, können Störeinflüsse wirken, welche die Messung verfälschen können. Sind mehrere Gabelbrücken vorhanden, so sollte die Verformungsmessung vor der obersten Gabelbrücke durchgeführt werden, welche am weitesten entfernt von möglichen Störeinflüssen angeordnet ist. Hinzukommt, dass Verformungsmessungen an freien Enden, beispielsweise an freien Enden der Lenkstange, oder an kraftfreien Abschnitten, beispielsweise an der Lenkstange zwischen zwei Lenkerklemmvorrichtungen, zu keinem verwertbaren Messergebnis führen, weshalb die Messung durch die Verformungsmesselemente zwischen dem Griffabschnitt und der Koppelvorrichtung bzw. entlang eines Kraftflusses von dem Griffabschnitt zu der Gabelbrücke erfolgen muss.

Eine vorteilhafte Weiterbildung sieht vor, dass entlang jedes die Lenkbewegung von der Lenkstange auf die Gabelbrücke übertragenden Kraftflusspfades ein Verformungsmesselement vorgesehen ist. Um aus der gemessenen Verformung das Fahrerlenkmoment bestimmen zu können, darf es keine nicht erfassten Kraftnebenschlüsse bzw. Kraftnebenflüsse geben, durch welche nicht bekannte Anteile der Kräfte bzw. der durch die Kräfte verursachten Verformung nicht erfasst werden.

Eine vorteilhafte Variante der Vorrichtung sieht vor, dass das Verformungsmesselement zumindest einen Dehnungsmessstreifen umfasst.

Vorteilhaft ist darüber hinaus eine Weiterbildung, bei welcher das Verformungsmesselement vier zu einer Vollbrücke angeordnete Dehnungsmessstreifen umfasst, welche angeordnet sind, die Dehnung in einer Ebene bzw. entlang einer Richtung zu messen. Vorzugsweise wird die Brückenschaltung mithilfe von aktiven Dehnungsmessstreifen realisiert.

Als Vollbrücke zur Messung der Dehnung in einer Ebene wird hierbei eine Brückenschaltung verstanden, bei welcher vorzugsweise zwei erste Dehnungsmessstreifen in Reihe geschalten sind, welche parallel zu zwei zweiten in Reihe geschalteten Dehnungsmessstreifen an einer Spannungsquelle angeordnet sind, wobei eine durch eine Dehnung verursachte Widerstandsänderung an den Dehnungsmessstreifen durch eine Spannungsmessung zwischen den jeweils in Reihe geschalteten Dehnungsmessstreifen erfasst und aus den gemessenen Spannungen die Dehnung und Stauchung bzw. die Verformung berechnet wird. Darüber hinaus sind die in Reihe geschalteten Dehnungsmessstreifen auf sich gegenüberliegenden Flächen eines Bauteils angeordnet, so dass bei einer Verformung des Bauteils von zwei Dehnungsmessstreifen eine Dehnung und von zwei Dehnungsmessstreifen eine Stauchung erfassbar sind.

Durch die Anordnung an gegenüberliegenden Flächen wird die Dehnung und Stauchung an beiden Seiten des Bauteils gemessen, wodurch bei Kenntnis der Bauteileigenschaften und entsprechender Kalibrierung die angreifende Kraft und aus der Kraft zusammen mit der Position des Verformungsmesselements an dem Bauteil das Lenkmoment bestimmt werden können.

Die Vollbrücke mit vier vorzugsweise aktiven Dehnungsmessstreifen, welche die Dehnung entlang einer Richtung bzw. in einer Ebene messen hat den Vorteil, dass Temperatureinflüsse, welche die Messung verfälschen können, und mechanische Störeinflüsse bestmöglich kompensiert werden.

Um ausschließlich die aus dem Fahrerlenkmoment resultierende Verformung zu messen und anschließend auf das Fahrerlenkmoment zu schließen, ist bei einer vorteilhaften Weiterbildung der Vorrichtung vorgesehen, dass das Verformungsmesselement ausgebildet ist, die Verformung der Lenkstange in einer einzelnen Ebene zu messen. In der einzelnen Ebene bzw. entlang der einzelnen Richtung, in welcher die Messung der Verformung durchgeführt wird, wird das jeweilige Bauteil, an welchem die Messung durchgeführt wird, ausschließlich von dem Lenkmoment verformt, so dass von der Verformung auf die Höhe bzw. einen Wert des Lenkmoments zurück geschlossen werden kann.

Vorzugweise ist das Verformungsmesselement ausgebildet und an der Lenkstange ausgerichtet, die Verformung der Lenkstange in einer orthogonal zur Lenkachse liegenden Lenkebene zu messen. Erfindungsgemäß bildet die Lenkstange oder die Koppelvorrichtung zumindest abschnittsweise einen Hohlraum aus. Das Verformungsmesselement ist an einer zu dem Hohlraum weisenden Innenseite der Lenkstange oder der Koppelvorrichtung angeordnet.

Eine erste besonders vorteilhafte Ausführungsform der Vorrichtung sieht vor, dass die Koppelvorrichtung zumindest ein als Auflager der Lenkstange ausgeführte Lenkerklemmvorrichtung aufweist, mit welcher die Lenkstange unmittelbar an der Gabelbrücke fixiert ist, wobei jeweils ein Verformungsmesselement zwischen jedem Griffabschnitt der Lenkstange und einer nächstliegenden Lenkerklemmvorrichtung an der Lenkstange angeordnet ist. Aus einer von dem jeweiligen Verformungsmesselement gemessenen Verformung der Lenkstange ist eine an dem Griffabschnitt wirkende Lenkkraft und das um die Lenkachse wirkende Lenkmoment bestimmbar.

Vorzugsweise wird die Verformung bzw. die Dehnung durch das Verformungsmesselement an zwei zueinander symmetrisch um die Lenkachse angeordneten Positionen erfasst, um asymmetrische Belastungen erfassen zu können und Lenkkräfte auch aus einer Differenz von auf beiden Seiten angreifenden Kräften ermitteln zu können.

Ein weiterer Aspekt der Erfindung betrifft ein Verfahren zur Bestimmung des Lenkmoments mit einer erfindungsgemäßen Vorrichtung. Bei dem Verfahren wird die Verformung der Lenkstange oder der Koppelvorrichtung durch das Verformungsmesselement gemessen und aus der gemessenen Verformung und einer Position des Verformungsmesselements an der Lenkstange oder der Koppelvorrichtung das um die Lenkachse wirkende Lenkmoment ermittelt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine erste Ausführung einer Vorrichtung zur Lenkmomentermittlung;
- Fig. 2: eine zweite Ausführung einer Vorrichtung zur Lenkmomentermittlung;
- Fig. 3: eine dritte Ausführung einer Vorrichtung zur Lenkmomentermittlung;

Die Figuren sind beispielhaft schematisch. Gleiche Bezugszeichen in den Figuren weisen auf gleiche funktionale und/oder strukturelle Merkmale hin.

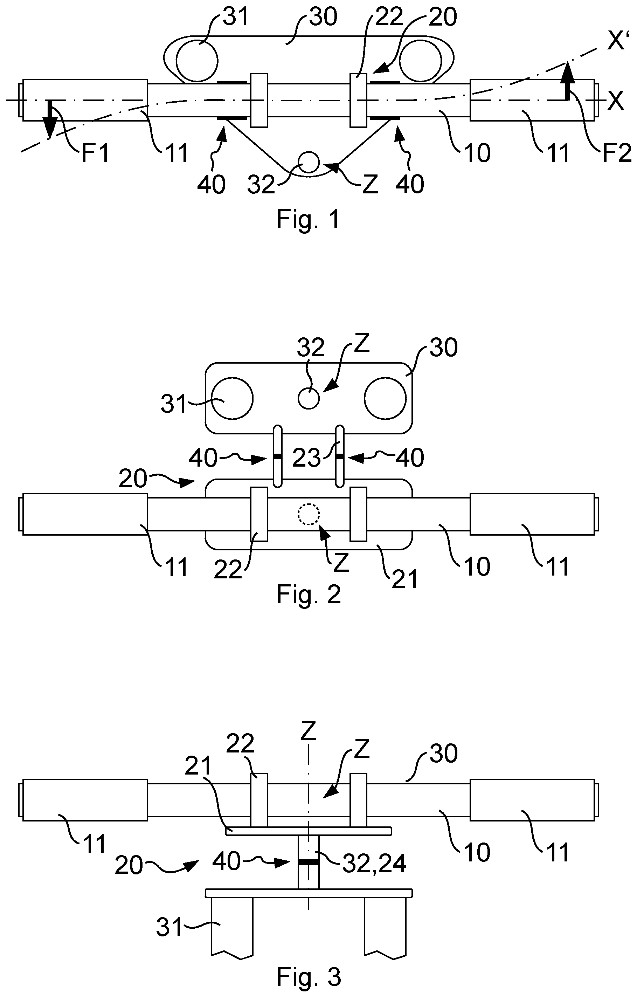

Die Figuren 1 bis 3 zeigen jeweils eine sich von den jeweils anderen unterscheidende Ausführungsvariante der Vorrichtung, welche insbesondere vom konstruktiven Aufbau des einspurigen Kraftfahrzeugs und der Lenkkraftübertragung abhängig ist. Dabei entsprechen die in den Figuren 1 bis 3 dargestellten Varianten nicht der erfindungsgemäßen Vorrichtung.

Bei der in Figur 1 gezeigten Ausführungsvariante ist die Lenkstange 10 durch zwei Lenkerklemmvorrichtungen 22 unmittelbar an der Gabelbrücke 30 fixiert, so dass die Koppelvorrichtung 20 bei der in Figur 1 gezeigten Variante im Wesentlichen durch die zwei Lenkerklemmvorrichtungen 22 gebildet wird. Durch die entlang der Längsachse X der Lenkstange 10 beabstandeten Lenkerklemmvorrichtungen 22 wird die Lenkstange 10 in drei Abschnitte geteilt. Ein in der Bildebene links- und rechtsseitiger Abschnitt, der jeweils benachbart zu einer Klemmvorrichtung 22 liegt, sowie ein zwischen den beiden Klemmvorrichtungen 22 liegender Mittelabschnitt. An den freien Enden der Lenkstange 10 entlang seiner Lengsachse X ist jeweils ein Griff mit einem Griffabschnitt 11 angeordnet, welche vorgesehen sind, Lenkkräfte von dem Fahrer auf die Lenkstange 10 zu übertragen. In die Griffabschnitte 11 eingebrachte Lenkkräfte führen zusammen durch den von der Lenkstange 10 bestimmten Hebel zu einem Lenkmoment um die Lenkachse Z. Dabei überträgt die Lenkstange 10 die Lenkkräfte, wodurch es zu einer für den Fahrer nicht wahrnehmbaren elastischen und reversiblen Verformung der Lenkstange 10 kommt. In der Lenkebene, welche orthogonal zu der Lenkachse Z liegt und welche bei der gezeigten Darstellung der Bildebene entspricht, weist die Lenkstange 10 zentrisch eine neutrale Faser und an ihrem Außenumfang eine Zug- und eine Druckfaser auf, wobei die Verformung am Außenumfang bzw. an der Zug- und Druckfaser in Form einer Dehnung oder Stauchung messbar ist. Um eine Verformung der Lenkstange 10 aufgrund einer in den Griffabschnitt 11 eingebrachten Lenkkraft messen zu können, ist zwischen dem Griffabschnitt 11 und der Koppelvorrichtung 10 bzw. der zu dem jeweiligen Griffabschnitt 11 nächstgelegenen Lenkerklemmvorrichtung 22 ein Verformungsmesselement 40 angeordnet. Um bei einer asymmetrischen Lenckraftbeaufschlagung, beispielsweise eine Lenkkraft an nur einem Griffabschnitt 11, oder bei Stützkräften, beispielsweise bei gleichgerichteten Kräften an den Griffabschnitten 11, die tatsächliche Lenkkraft und das daraus resultierende Fahrerlenkmoment bestimmen zu können, sind bei der gezeigten Ausführungsform zwei symmetrisch angeordnete Verformungsmesselemente 40 vorgesehen. Das Verformungsmesselement 40 wird jeweils von vier zu einer Vollbrücke verschalteten Dehnungsmessstreifen gebildet, von denen zwei auf einer ersten Fläche und zwei auf einer gegenüberliegenden zweiten Fläche der Lenkstange 10 vorgesehen sind, wobei die Flächen jeweils orthogonal zu der Lenkebene angeordnet sind, so dass von jeweils zwei Dehnungsmessstreifen eine Dehnung und eine Stauchung messbar sind. Bei dem in Figur 1 gezeigten Ausführungsbeispiel wird die Lenkachse Z von einer Achse 32 bestimmt, um welche die Gabelbrücke 30 mit den daran fixierten Gabelbeinen 31 und der durch die Lenkerklemmvorrichtungen 22 fixierte Lenkstange 10 dreh- bzw. lenkbar ist.

In Figur 1 ist ein beispielhafter Belastungsfall gezeigt, bei welchem eine erste Lenkkraft F1 auf einen Griffabschnitt 11 und eine zweite Lenkkraft F2 auf einen gegenüberliegenden Griffabschnitt 11 aufgebracht sind. Durch die Lenkkräfte F1, F2 wird die Lenkstange 10 minimal verformt, so dass die Längsachse X bzw. die neutrale Faser der Lenkstange 10 sich, stark überzeichnet dargestellt, zu einer neuen Längsachse X' bzw. neuen neutralen Faser verformt. An den Verformungsmesselementen 40 kann dadurch jeweils eine Dehnung der Zugfaser und eine Stauchung der Druckfaser gemessen werden. Aus den Messwerten kann mit der Position der Verformungsmesselemente 40 an der Lenkstange 10, der Maße und der Anordnung der Lenkstange 10 und der Lenkachse Z das Fahrerlenkmoment ermittelt werden sowie zusätzlich die Lenkkräfte F1, F2.

Bei der in Figur 2 dargestellten Ausführung umfasst die Koppelvorrichtung zusätzlich eine Lenkerbrücke 21, an welcher die Lenkstange 10 mit zwei Lenkerklemmvorrichtungen 22 fixiert ist, sowie zwei Koppelstangen 23. Die Koppelstangen 23 verbinden die Lenkerbrücke 21 mit der Gabelbrücke 30, wobei durch die Koppelstangen 23 die Lenkbewegung von der Lenkerbrücke 21 bzw. den Lenkstangen 10 auf die Gabelbrücke 30 übertragen werden. Die Ausführungsform entspricht beispielsweise schematisch dem Aufbau einer Duolever-Vorderradaufhängung. In einem idealen System, in welchem die Koppelstangen 23 die Lenkbewegung spielfrei übertragen, kann alternativ an nur einer der Koppelstangen 23 ein Verformungsmesselement 40 vorgesehen sein, wobei bei der gezeigten Ausführungsform an jeder Koppelstange 23 jeweils ein Verformungsmesselement 40 vorgesehen ist. Die Lenkerbrücke 21 ist um die Lenkachse Z drehbar gelagert, wobei über die Lagerung keine Lenkmomente übertragbar sind, so dass die Lenkkräfte bzw. Fahrerlenkmomente ausschließlich durch die Koppelstangen 23 auf die Gabelbrücke 30 und die daran befestigten Gabelbeine 31 bzw. auf das Vorderrad übertragen werden können. Die Koppelstangen 23 erfahren durch die übertragenen Lenkkräfte bzw. Fahrerlenkmomente eine Stauchung und/oder Dehnung, welche von Verformungsmesselementen 40 gemessen werden. Da die Koppelstangen 23 sich auch abhängig von Federbewegungen des Fahrwerks bzw. der Gabelbrücke bewegen, verschiebt sich auch die Ebene in welcher die Messung stattfindet, so dass bei der in Figur 2 gezeigten Ausführungsform die Verformungsmessung nicht in einer Ebene orthogonal zu der Lenkachse stattfindet. Da von den Koppelstangen 23 jedoch lediglich Lenkmomente übertragen werden und beispielsweise Stützkräfte auf die Griffabschnitte 11 von der Lagerung der Lenkerbrücke 21 oder entgegen gerichteten Kräften kompensiert werden, sind durch eine Messung der Stauchung und Dehnung der Koppelstangen 23 die Lenkkräfte und das daraus resultierende Fahrerlenkmoment bestimmbar.

Die zwei Koppelstangen 23 entsprechen einer schematischen Darstellung und können beispielsweise auch zwei verbundene Dreieckslenker sein, welche zwischen Lenkerbrücke und Gabelbrücke bzw. Gabel angeordnet sind und die Lenkerbewegungen übertragen. Bei einer Ausführung mit zwei Dreieckslenkern kann/können an nur einer der Dreieckslenker ein/zwei Verformungsmesselement(e) 40 angeordnet sein.

Figur 3 illustriert eine weitere alternative Ausführungsvariante einer Vorrichtung zur Ermittlung des Lenkmoments. Die Lenkkräfte werden von der Lenkerbrücke 21 in Form des Fahrerlenkmoments auf eine die Lenkachse Z bestimmende Achse 32 übertragen, welche zugleich einer zu der Koppelvorrichtung 20 gehörenden Achsstange 24 entspricht. Das Fahrerlenkmoment führt an der Achsstange 24 zu einer Verformung in Form einer Torsion, welche von einem an der Achstange 24 angeordneten Verformungsmesselement 40 erfassbar ist, so dass aus der gemessenen Torsion das Fahrerlenkmoment bestimmbar ist.

Die Figuren 1 bis 3 zeigen jeweils unterschiedliche Ausführungsformen einer Vorrichtung zur Ermittlung des Fahrerlenkmoments, wobei die Varianten zur Erhöhung der Genauigkeit zumindest teilweise kombiniert werden können. Beispielsweise kann an den Lenkstangen 10 der in Figur 1 und 2 dargestellten Ausführungsvarianten jeweils Verformungsmesselemente 40 entsprechend der Ausführungsvariante der Figur 1 vorgesehen sein, um das Fahrerlenkmoment durch zwei unterschiedliche Messungen zu bestimmen und so Messfehler auszuschließen, eine Fehlertoleranz zu erhöhen und eine höhere Messgenauigkeit zu erreichen.

## Patentansprüche

1. Vorrichtung zur Lenkmomentermittlung an einem einspurigen Kraftfahrzeug umfassend eine um eine Lenkachse (Z) drehbar gelagerte Lenkstange (10), eine um die Lenkachse (Z) drehbar gelagerte Gabelbrücke (30) sowie eine zwischen der Lenkstange und der Gabelbrücke angeordnete und mit diesen verbundene Koppelvorrichtung (20), wobei
die Koppelvorrichtung (20) ausgebildet ist, eine um die Lenkachse (Z) gerichtete Lenkbewegung von der Lenkstange (10) auf die Gabelbrücke (30) zu übertragen,
an der Lenkstange (10) ein Griffabschnitt (11) vorgesehen ist, in welchen eine die Lenkbewegung verursachende Lenkkraft (F1, F2) einleitbar ist, **dadurch gekennzeichnet, dass**
zwischen dem Griffabschnitt (11) der Lenkstange (10) und der Gabelbrücke (30) ein Verformungsmesselement (40) an der Lenkstange (10) vorgesehen ist, welches ausgebildet ist, eine Verformung der Lenkstange (10) zur Ermittlung des Lenkmoments zu messen,
wobei die Lenkstange (10) oder die Koppelvorrichtung (20) zumindest abschnittsweise einen Hohlraum ausbildet und das Verformungsmesselement (40) an einer zu dem Hohlraum weisenden Innenseite der Lenkstange (10) oder der Koppelvorrichtung (20) angeordnet ist.

2. Vorrichtung nach dem vorhergehenden Anspruch, wobei
entlang jedes die Lenkbewegung von der Lenkstange (10) auf die Gabelbrücke (30) übertragenden Kraftflusspfades ein Verformungsmesselement (40) vorgesehen ist.

3. Vorrichtung nach einem der vorhergehenden Ansprüche, wobei
das Verformungsmesselement (40) zumindest einen Dehnungsmessstreifen umfasst.

4. Vorrichtung nach dem vorhergehenden Anspruch, wobei
das Verformungsmesselement (40) vier zu einer Vollbrücke angeordnete Dehnungsmessstreifen umfasst, welche angeordnet sind, die Dehnung in einer Ebene zu messen.

5. Vorrichtung nach einem der vorhergehenden Ansprüche, wobei
das Verformungsmesselement (40) ausgebildet ist, die Verformung der Lenkstange (10) oder der Koppelvorrichtung (20) in einer einzelnen Ebene zu messen.

6. Vorrichtung nach einem der vorhergehenden Ansprüche, wobei
das Verformungsmesselement (40) ausgebildet und an der Lenkstange (10) oder der Koppelvorrichtung (20) ausgerichtet ist, die Verformung der Lenkstange (10) in einer orthogonal zur Lenkachse (Z) liegenden Lenkebene zu messen.

7. Vorrichtung nach einem der vorhergehenden Ansprüche, wobei
die Koppelvorrichtung (20) zumindest ein als Auflager der Lenkstange ausgeführte Lenkerklemmvorrichtung aufweist, mit welcher die Lenkstange (10) unmittelbar an der Gabelbrücke (30) fixiert ist, wobei
jeweils ein Verformungsmesselement (40) zwischen jedem Griffabschnitt (11) der Lenkstange (10) und einer nächstliegenden Lenkerklemmvorrichtung an der Lenkstange (10) angeordnet ist und
aus einer von dem jeweiligen Verformungsmesselement (40) gemessenen Verformung der Lenkstange (10) eine an dem Griffabschnitt (11) wirkende Lenkkraft (F1, F2) und das um die Lenkachse (Z) wirkende Lenkmoment bestimmbar ist.

8. Verfahren zur Bestimmung des Lenkmoments mit einer Vorrichtung nach einem der vorhergehenden Ansprüchen, wobei
die Verformung der Lenkstange (10) durch das Verformungsmesselement (40) gemessen wird und
aus der gemessenen Verformung und einer Position des Verformungsmesselements (40) an der Lenkstange (10) oder der Koppelvorrichtung (20) das um die Lenkachse (Z) wirkende Lenkmoment ermittelt wird.

## Claims

1. Device for determining the steering torque on a single-track motor vehicle, comprising a handlebar (10) rotatably mounted about a steering axle (Z), a fork bridge (30) rotatably mounted about the steering axle (Z), and a coupling device (20) which is arranged between the handlebar and the fork bridge and is connected to them, wherein
the coupling device (20) is designed to transmit a steering movement, which is directed about the steering axle (Z), from the handlebar (10) to the fork bridge (30),
on the handlebar (10) a gripping portion (11) is provided in which a steering force (F1, F2) causing the steering movement can be introduced, **characterized in that**
between the gripping portion (11) of the handlebar (10) and the fork bridge (30), a deformation measuring element (40) is provided on the handlebar (10), said deformation measuring element being designed to measure a deformation of the handlebar (10) for determining the steering torque,
wherein the handlebar (10) or the coupling device (20) at least in sections forms a cavity, and the deformation measuring element (40) is arranged on an inside of the handlebar (10) or of the coupling device (20), the inside facing the cavity.

2. Device according to the preceding claim, wherein
a deformation measuring element (40) is provided along each force flux path transmitting the steering movement from the handlebar (10) to the fork bridge (30).

3. Device according to either of the preceding claims, wherein
the deformation measuring element (40) comprises at least one strain gauge.

4. Device according to the preceding claim, wherein the deformation measuring element (40) comprises four strain gauges which are arranged to form a full bridge and are arranged to measure the strain in a plane.

5. Device according to any one of the preceding claims, wherein
the deformation measuring element (40) is designed to measure the deformation of the handlebar (10) or of the coupling device (20) in a single plane.

6. Device according to any one of the preceding claims, wherein
the deformation measuring element (40) is designed and aligned with the handlebar (10) or the coupling device (20) to measure the deformation of the handlebar (10) in a steering plane lying orthogonally to the steering axle (Z).

7. Device according to any one of the preceding claims, wherein
the coupling device (20) has at least one handlebar clamping device which is designed as a support of the handlebar and with which the handlebar (10) is fixed directly to the fork bridge (30), wherein
a deformation measuring element (40) is arranged between each gripping portion (11) of the handlebar (10) and a nearest handlebar clamping device on the handlebar (10), and
a steering force (F1, F2) acting on the gripping portion (11) and the steering torque acting about the steering axle (Z) can be determined from a deformation of the handlebar (10) measured by the respective deformation measuring element (40).

8. Method for determining the steering torque with a device according to any one of the preceding claims, wherein
the deformation of the handlebar (10) is measured by the deformation measuring element (40), and
the steering torque acting about the steering axle (Z) is determined from the measured deformation and a position of the deformation measuring element (40) on the handlebar (10) or on the coupling device (20).

## Revendications

1. Dispositif de détermination du couple de direction sur un véhicule automobile monotrace, comprenant un guidon (10) monté de manière rotative autour d'un axe de direction (Z), un pont de fourche (30) monté de manière rotative autour de l'axe de direction (Z), ainsi qu'un dispositif de couplage (20) agencé entre le guidon et le pont de fourche et relié à ceux-ci,
le dispositif de couplage (20) étant réalisé pour transmettre un mouvement de direction orienté autour de l'axe de direction (Z) du guidon (10) au pont de fourche (30),
une section de préhension (11) étant prévue sur le guidon (10), dans laquelle une force de direction (F1, F2) provoquant le mouvement de direction peut être introduite, **caractérisé en ce que**
entre la section de préhension (11) du guidon (10) et le pont de fourche (30), il est prévu sur le guidon (10) un élément de mesure de déformation (40) qui est réalisé pour mesurer une déformation du guidon (10) pour déterminer le couple de direction,
le guidon (10) ou le dispositif de couplage (20) réalisant au moins par sections un espace creux et l'élément de mesure de déformation (40) étant agencé sur un côté intérieur du guidon (10) ou du dispositif de couplage (20) orienté vers l'espace creux.

2. Dispositif selon la revendication précédente,
un élément de mesure de déformation (40) étant prévu le long de chaque trajet de flux de force transmettant le mouvement de direction du guidon (10) au pont de fourche (30).

3. Dispositif selon l'une quelconque des revendications précédentes,
l'élément de mesure de déformation (40) comprenant au moins une jauge de contrainte.

4. Dispositif selon la revendication précédente,
l'élément de mesure de déformation (40) comprenant quatre jauges de contrainte agencées en un pont complet, qui sont agencées pour mesurer la contrainte dans un plan.

5. Dispositif selon l'une quelconque des revendications précédentes,
l'élément de mesure de déformation (40) étant réalisé pour mesurer la déformation du guidon (10) ou du dispositif de couplage (20) dans un plan unique.

6. Dispositif selon l'une quelconque des revendications précédentes,
l'élément de mesure de déformation (40) étant réalisé et orienté sur le guidon (10) ou le dispositif de couplage (20) pour mesurer la déformation du guidon (10) dans un plan de direction orthogonal à l'axe de direction (Z).

7. Dispositif selon l'une quelconque des revendications précédentes,
le dispositif de couplage (20) présentant au moins un dispositif de serrage de guidon réalisé sous forme de support du guidon, avec lequel le guidon (10) est fixé directement sur le pont de fourche (30),
un élément de mesure de déformation (40) respectif étant agencé entre chaque section de préhension (11) du guidon (10) et un dispositif de serrage de guidon le plus proche sur le guidon (10), et
à partir d'une déformation du guidon (10) mesurée par l'élément de mesure de déformation respectif (40), une force de direction (F1, F2) agissant sur la section de préhension (11) et le couple de direction agissant autour de l'axe de direction (Z) pouvant être déterminés.

8. Procédé de détermination du couple de direction avec un dispositif selon l'une quelconque des revendications précédentes,
la déformation du guidon (10) étant mesurée par l'élément de mesure de déformation (40), et
le couple de direction agissant autour de l'axe de direction (Z) étant déterminé à partir de la déformation mesurée et d'une position de l'élément de mesure de déformation (40) sur le guidon (10) ou le dispositif de couplage (20).
